# EUROPEAN PATENT APPLICATION

(11) **EP 3 203 617 A1**
(43) Date of publication of application: **09.08.2017**
(21) Application number: 16153930.9
(22) Date of filing: 02.02.2016
(51) Int. Cl.: H02K 11/25, H02K 11/35

(54) **A ROTOR AND A METHOD TO INSPECT A ROTOR**

(71) Applicant: General Electric Technology GmbH, 5400 Baden (CH)
(72) Inventor: Munk, Tobias, 5400 Baden (CH); Scherf, Gunter, 5400 Baden (CH)
(74) Representative: General Electric Technology GmbH

(57) **Abstract**

The present disclosure relates to a rotor and to a method to inspect a rotor of an electric machine. It is an object of the invention to avoid damages and to improve the power density of a rotor of an electric machine. Disclosed is a method for inspecting a rotor of an electric machine with the method steps of placing a temperature logger into a compartment of the rotor winding, starting the rotor, recording temperature data by the temperature logger, stopping the rotor, removing and readout of the temperature logger. Further disclosed is a rotor of an electric machine, with a compartment in the rotor winding to house a temperature logger, and a removable cover plate to close the compartment, and the use of a temperature logger to analyse the thermal characteristic of a rotor of an electric machine.

## Description

### TECHNICAL FIELD

The present disclosure relates to a rotor and to a method to inspect a rotor of an electric machine.

The electric machine is in particular a rotating electric machine such as a synchronous generator to be connected to a gas or steam turbine, then referred to as turbogenerator, or a synchronous generator to be connected to a hydro turbine, then referred to as hydro generator, or an asynchronous generator or a synchronous or asynchronous electric motor or also other types of electric machines.

### BACKGROUND

Electrically conductive windings are composed to electric coils in electric machines. These coils or windings are made from copper usually. The windings are placed in slots in the core sheets of the rotor or stator of the electric machine. The end pieces of the windings protrude over the slots and are in the case of high energy generators bent in relation to the main winding part housed in the slot. Here, especially the end windings of a stator of an electric machine are considered. In particular the end windings of the rotor suffer from locally high temperatures which spots can hardly be determined. Spots with excessive temperatures in the end windings of the rotor are referred to as hot spots in the following. The temperature of the conductor bars of the rotor which form the rotor windings is limited by standards and is therefore a criterion to design a rotor. In this context the danger of rotor damages due to high temperatures exists.

### SUMMARY

It is an object of the invention to avoid damages and to improve the power density of a rotor of an electric machine. This object is solved with the features of a method for inspecting a rotor, a rotor, and the use of a temperature logger in a rotor according to the independent claims.

Further examples of the invention are disclosed in the dependent claims.

In an example of the invention the thermal characteristic of the rotor is analysed on basis of the readout data from the temperature logger. The knowledge of the thermal characteristic of the rotor provides the operator important insight to the rotor properties, especially in operation.

In a further related method step the rotor is operated with the maximum temperature on basis of the analysed thermal characteristic of the rotor. By operating the rotor with a maximum or near maximum temperature the power density and thus the power output of the electric machine can be enhanced.

In one example of the invention the temperature logger is fixed by a threaded pin to an end insulation plate of the rotor. The temperature logger is securely fixed to the rotor winding by this means. A damage of the temperature logger in operation of the rotor can be avoided, especially damages caused by centrifugal forces.

### BRIEF DESCRIPTION OF THE DRAWINGS

Further characteristics and advantages will be more apparent from the description of an embodiment of the rotor and a method for inspecting a rotor, illustrated by way of non-limiting example in the accompanying drawings, in which:
- Fig. 1: shows a schematic view of a cut part of an end winding of a rotor of an electric machine with a compartment in the end winding confined by a copper adapter and a temperature logger housed inside the compartment;
- Fig. 2: shows a schematic view of the temperature logger removed from the rotor end winding and connected to an analysing computer via data lines to read out and analyse the collected temperature data;
- Fig. 3: shows a schematic view of a part of a rotor end winding similar to Fig. 1 with a compartment in the end winding confined by a copper adapter and a temperature logger housed inside the compartment, with a number of adjacent conductor bars of the end winding.

### DETAILED DESCRIPTION OF EXEMPLARY EMBODIMENTS

With reference to the figures, these show schematic views of cut parts of a rotor with a temperature logger and a connected analysing computer, wherein like reference numerals designate identical parts throughout the several views.

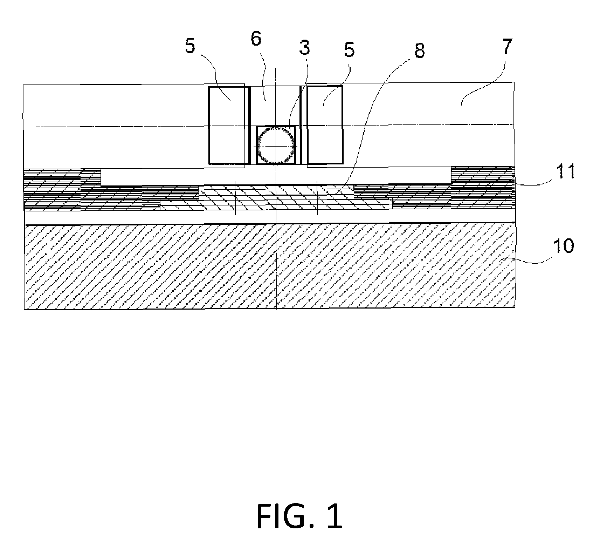

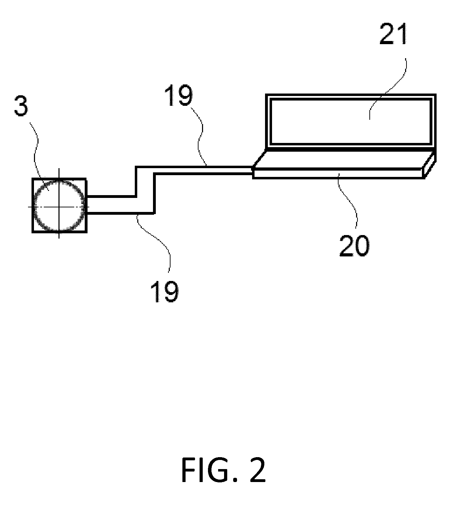

Fig. 1 shows a schematic view of a cut part of a rotor winding 2 of a rotor 1 of an electric machine. The rotor 1 is commonly manufactured as a massive steel block with the shape of a cylinder. The rotor winding 2 constitutes the bended end parts of the conductor bars 7 which main parts are essentially housed in rotor slots. The terminals of the rotor winding 2 are connected with a retaining ring which encloses the rotor winding 2. In operation the copper conductor bars 7 are heated, in this disclosure in particular the rotor end winding 2 formed by the conductor bars 7 is described. In the rotor winding 2 a compartment 6 is formed as a cavity in the massive conductor bar 7 of the rotor winding 2. The compartment 6 is created by milling for example. The compartment 6 can be created when manufacturing a new rotor winding 2 or alternatively the compartment 6 is formed into an existing rotor winding 2. The size of the compartment 6 is in the range of several millimeters to accommodate a temperature logger 3. The depth of the compartment is for example 20mm, the breadth is 8mm. These dimensions are sufficient to place the temperature logger 3 with slightly smaller dimensions into the compartment 6. The temperature logger 3 is commercially available with a weight in the range of several grams. The temperature logger 3 is essentially a temperature measuring device. The temperature logger 3 has an integrated power source, a battery. The temperature logger 3 records the temperature of the surrounding material and stores the recorded date in an included memory. The memory included in the temperature logger 3 is in the range of several kilobytes of data. This memory capacity is sufficient for the needs to record the temperature data. The temperature logger 3 is suitable to withstand temperatures, e.g. a temperature of 125°C and above. The temperature logger 3 is connectable to an external device to read out the stored data from the memory. It is pointed out that the temperature logger 3 can be any device which fulfils the described functions, namely measuring the temperature in the adjacent material, recording the measured temperature data, being removable from the rotor 1, and suitable to connect to another device to read out the recorded data. In the example of Fig. 1 the compartment 6 in the rotor winding 2 is confined by a copper adapter 5 which is housed inside the compartment 6. The copper adapter 5 is designed to fit into the milled compartment 6 and to create a connection of the temperature logger 3 with the copper material of the rotor winding 2. The copper adapter 5 further facilitates the insertion and the removal of the temperature logger 3 into and from the compartment 6, respectively. Adjacent to the compartment 6 a removable cover 8 is arranged to fit to the rotor winding 2 and to close the compartment 6. The removable cover 8 is a small cap which shuts the compartment 6 when the copper adapter 5 with the temperature logger 3 is inserted. In particular, the removable cover 8 is fit to an end insulation plate 11, as can be seen in Fig. 1. When inserted the removable cover 8 forms part of the end insulation plate 11. The material of the removable cover 8 is metal, e.g. copper or aluminium. The connection of the rotor winding 2 with the removable cover 8 is created by positive locking, the removable cover 8 can be inserted by means of a hammer. When the rotor heats up and the material expands the locking of the removable cover 8 is fortified. When the temperature logger 3 is placed into the compartment 6 the removable cover 8 closes the compartment 6 and the rotor 1 is started and run up to speed. After some operation time and heating up of the rotor material the temperature logger 3 triggers to measure the temperature of the adjacent rotor material in the rotor winding 2. The temperature is measured several times over some hours of operation of the rotor 1 and recorded in the memory. Then, the rotor 1 is stopped and shut down. When the rotor 1 comes to rest the removable cover 8 is removed from the rotor winding 2. The removal can be done while the installed retaining ring is installed which reduces the installation efforts. The removal of the removable cover 8 is done by a tool as a drawer. The copper adapter 5 with the temperature logger 3 is fetched from the compartment 6. Next, the temperature logger 3 is connected via data lines 19 to an analysing computer 20, as can be seen in Fig. 2 in a schematic view. The analysing computer 20 can be a laptop with suitable software to read out the memory of the temperature logger 3. The measured temperature data is transferred to the analysing computer 20. In the analysing computer 20 the thermal characteristic of the rotor 1 is prepared on basis of the measured data. Especially, maximum values of the measured temperatures in the rotor winding 2 are highlighted. Further, it is determined the duration of these maximum values. The thermal characteristic is shown to the operator on a display 21 of the analysing computer 20. From the thermal characteristic the operator or the analysing computer 20 concludes the operation limits of the rotor 1, in particular the maximum power density. The operator who determines the operation temperature limits of the rotor 1 is enabled to operate the rotor 1 close to the temperature limit. The temperature of rotor conductors or conductor bars 7 is limited by standards and is therefore a criterion to design a rotor 1. Without this knowledge the operator has to operate the rotor 1 commonly with a lower power density owing to operation safety. Thus, the power density of the electric machine is increased by means of the rotor 1 and the corresponding method. Moreover, when applying the invention to a new rotor 1 to be manufactured the determined operation temperature limits and power density can be specified and announced to the costumer. Operating the electric machine close to the temperature limits allowed by the standard provides substantial power output benefits. The measuring method can be used for temperature measurements in the spin pit, during a factory running test, or during operation of the rotor 1.

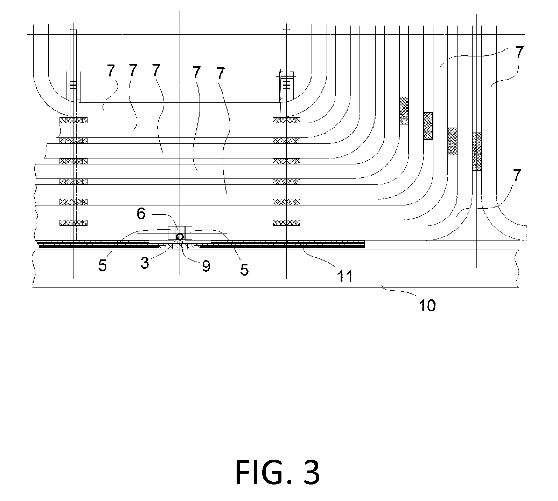

Fig. 3 shows a schematic view of a part of a rotor winding 2. Here, a multitude of adjacently arranged conductor bars 7 of the winding 2 are shown. The adjacent conductor bars 7 form the rotor winding 2. The bottom conductor bar 7 of the winding 2 is equipped with a temperature logger 3 as described above. Shown is the compartment 6 in the end winding 2 confined by a copper adapter 5 and the temperature logger 5 housed inside the compartment 6. A cover plate 10 finishes the rotor 1. A threaded pin 9 is mounted at the removable cover 8 which one end abuts the temperature logger 3 to fix the temperature logger 3 in the compartment 6. This measure safeguards the position of the temperature logger 3 in operation with high centrifugal forces.

While the invention has been described in detail with reference to exemplary embodiments thereof, it will be apparent to one skilled in the art that various changes can be made, and equivalents employed, without departing from the scope of the invention. The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents.

### REFERENCE NUMBERS

- 1: rotor
- 2: rotor winding
- 3: temperature logger
- 5: copper adapter
- 6: compartment
- 7: conductor bar
- 8: removable cover
- 9: threaded pin
- 10: cover plate
- 11: end insulation plate
- 12: copper connection
- 19: data lines
- 20: analysing computer
- 21: display

## Claims

1. A method for inspecting a rotor (1) of an electric machine with the method steps of placing a temperature logger (3) into a compartment (6) of the rotor winding (2), starting the rotor (1), recording temperature data by the temperature logger (3), stopping the rotor (1), removing and readout of the temperature logger (3).

2. A method for inspecting a rotor (1) of an electric machine according to claim 1, **characterized in** analysing the thermal characteristic of the rotor (1) on basis of the readout data from the temperature logger (3).

3. A method for inspecting a rotor (1) of an electric machine according to claim 2, **characterized in** operating the rotor (1) with the maximum temperature on basis of the analysed thermal characteristic of the rotor (1).

4. A method for inspecting a rotor (1) of an electric machine according to claim 1, **characterized in that** the compartment (6) in the rotor winding (2) is formed by a copper adapter (5).

5. A method for inspecting a rotor (1) of an electric machine according to claim 1, **characterized in** fixing the temperature logger (3) by a threaded pin (9) to an end insulation plate (11) of the rotor (1)

6. A method for inspecting a rotor (1) of an electric machine according to claim 1, **characterized in** closing the compartment (6) with a removable cover plate (8).

7. Rotor (1) of an electric machine, with a compartment (6) in the rotor winding (2) to house a temperature logger (3), and a removable cover plate (8) to close the compartment (6).

8. Rotor (1) of an electric machine according to claim 7, **characterized in that** the temperature logger (3) in the rotor winding (2) is placed into a copper adapter (5).

9. Rotor (1) of an electric machine according to claim 7, **characterized in** a threaded pin in an end insulation plate (11) of the rotor (1) or in the removable cover (8) of the rotor (1) to fix the temperature logger (3) to.

10. Use of a temperature logger (3) according to claim 1 to analyse the thermal characteristic of a rotor (1) of an electric machine.
